# EUROPÄISCHE PATENTSCHRIFT

(11) **EP 2 619 477 B1**
(45) Veröffentlichungstag und Bekanntmachung des Hinweises auf die Patenterteilung: **19.05.2021**
(21) Anmeldenummer: 11745958.6
(22) Anmeldetag: 15.08.2011
(51) Int. Cl.: F16G 3/02, F16G 3/09

(54) **STAHLSEILFÖRDERGURT MIT EINEM VERBINDUNGSSCHARNIER ZUM KOPPELN ZWEIER GURTENDEN**
STEEL CABLE CONVEYOR BELT HAVING A CONNECTION HINGE FOR COUPLING TWO BELT ENDS
BANDE TRANSPORTEUSE À CÂBLES D'ACIER MUNIE D'UNE CHARNIÈRE DE LIAISON POUR L'ACCOUPLEMENT DE DEUX EXTRÉMITÉS DE BANDE

(30) Priorität: 22.09.2010 DE 102010037697
(43) Veröffentlichungstag der Anmeldung: 31.07.2013
(73) Patentinhaber: ContiTech Transportbandsysteme GmbH, 30165 Hannover (DE)
(72) Erfinder: MÖSCHEN, Michael, 37176 Nörten-Hardenberg (DE); HÜLS, Achim, 30890 Barsinghausen (DE)
(74) Vertreter: Continental Corporation
(86) Internationale Anmeldenummer: PCT/EP2011/064007
(87) Internationale Veröffentlichungsnummer: WO 2012/038155

(56) Entgegenhaltungen:
- DE-A1- 2 357 994
- DE-A1- 2 453 463
- DE-U1-202009 003 649
- GB-A- 2 212 241

## Beschreibung

Die Erfindung betrifft einen Fördergurt oder Fördergurtsegment aus elastomerem Werkstoff mit einer Festigkeitsträgerlage aus in Längsrichtung des Fördergurtes verlaufenden, parallel zueinander angeordneten Stahlseilen, wobei jedes Gurt- bzw. Segmentende eine Ausbildung zum scharnierartigen Zusammenkoppeln mit einem anderen Gurt- bzw. Segmentende aufweist.

Es ist bekannt, aus elastomerem Werkstoff bestehende Fördergurte dadurch endlos zu schließen, dass die beiden Enden des Fördergurtes nach einem gezielten Abarbeiten der Gummideckschichten in den Endbereichen zusammengelegt und durch Vulkanisation unlösbar miteinander verbunden werden.

Das ist besonders bei Stahlseilfördergurten übliche Praxis, die auch nach einem Schaden und folgender Reparatur eines Stahlseilfördergurtes zur Anwendung kommt. Nach Überlappen der Gurtenden und Ineinanderlegen der freigelegten Stahlseilendabschnitte und nach Auflegen von Gummideckplatten wird eine Stahlseilgurtverbindung durch Vulkanisieren hergestellt. Der Geräte- und Zeitaufwand zum Herstellen einer derartigen Stahlseilgurtverbindung ist hoch. Der Produktionsprozess bzw. Förderprozess ist in dieser Zeit unterbrochen.

Um wenigstens einen Notbetrieb der Förderanlage zu erreichen, ist es aus EP 0 483 630 B1 bekannt, einige Stahlseilenden an beiden Gurtbruchenden freizulegen und mit einem separaten Verbindungsstück aus festem Werkstoff kraftschlüssig zu koppeln. Diese Verbindung ist aber lediglich kurzfristig für eine dringend benötigte Förderanlage im Sinne einer Notverbindung mit verminderter Belastbarkeit zu sehen. Nach einem möglichen Stilllegen der Förderanlage wird der Fördergurt wieder herkömmlich durch Vulkanisation seiner beiden Enden endlos geschlossen.

Für bestimmte Fördergurte sind auch Endlosverbindungen bzw. Endverbindungen durch mechanische Verbindungsvorrichtungen bekannt. Dabei weist das jeweilige Gurtende ein mechanisches Verbindungsteil auf, das mit dem Verbindungsteil des jeweils anderen Gurtendes lösbar gekoppelt wird. Eine derartige lösbare Verbindungsform ist die Scharnierform. Dabei weisen die Gurtenden jeweils ein Teilscharnier auf, das mit dem Teilscharnier des jeweils anderen Gurtendes komplementär zusammengefügt und durch einen durch die zinnenartigen, ineinandergreifenden Scharnierösen geführten Kopplungsstab miteinander zugfest verbunden wird.

Diese lösbaren Verbindungen werden besonders für Fördergurte, die nur mit großem Aufwand montiert werden können oder die im Betrieb häufiger ausgewechselt, gekürzt oder verlängert werden müssen, angewandt. Derartige Scharnierverbindungen werden überwiegend bei gewebeverstärkten Fördergurten eingesetzt. Bei Stahlseilfördergurten haben sich die scharnierartigen Verbindungen nicht durchsetzen können, da die zugfeste Anbindung der Scharnierteile an die Gurtenden ein nicht gelöstes Problem darstellt.

Aus der GB 902 300 ist es bekannt, Fördergurtsegmente mit einer Cordeinlage aus Stahldrähten zu versehen. Die Drahtcordeinlage besteht aus einem helixförmig über die Gurtbreite verlegten schmalen Kautschukband, das einige Drähte in seiner zum Band ausgewalzten, vulkanisierbaren Gummimischung in einer horizontalen Ebene parallel nebeneinander liegend aufnimmt. An jedem Segmentende wird das Kautschukband unter jeweils zweimaligem Seitenversatz zu mehreren Schlaufen geformt. Bei Zurücklaufen aus jeder Schlaufe erfährt das Kautschukband wieder einen Seitenversatz und verläuft seitlich neben dem Bandzulauf in derselben horizontalen Ebene. Das Kautschukband bildet auf diese Weise an beiden Enden des Fördergurtsegmentes mehrere in einer Ebene liegende, voneinander beabstandete gummierte Schlaufen. Die Stahldrähte werden aus ihrer im Gurtsegment verlaufenden Richtung zum Schlaufenbereich und aus ihm heraus ausgelenkt.

Die gebildeten Schlaufen liegen zinnenförmig im Abstand zueinander. In die so gebildeten Zwischenräume können komplementäre, gummierte Schlaufen des Gurtendes eines anderen Fördergurtsegmentes eingreifen. Mittels eines Kupplungsstabes werden beide Schlaufenreihen scharnierartig miteinander gekuppelt.

Die zur Schlaufe geformten Stahldrähte müssen sehr scharf umgelenkt werden. Dies führt zu einer deutlichen Herabsetzung der zulässigen Zugbelastung bzw. zu einer Bruchgefahr der Stahldrähte. Es ist ersichtlich, dass nur sehr dünne Stahldrähte diese Verformung überhaupt mitmachen können. Für große Kräfte übertragende Stahlseilfördergurte mit relativ starren Stahlseilen ist diese Konstruktion nicht geeignet. Außerdem wird der gesamte Gurtquerschnitt in seiner Dicke in dem Bereich des Gurtendes zwangsläufig durch die Konstruktion vergrößert, was sich bei einem Umlauf des gesamten Fördergurtes in der Förderanlage nachteilig darstellt.

Der Erfindung liegt die Aufgabe zugrunde, eine Scharnierverbindung auch für Stahlseilfördergurte bzw. Stahlseilfördergurtsegmente mit mittleren und größeren Seildurchmessern zu schaffen, die zugfest und mit geringem Aufwand herstellbar ist.

Die Aufgabe wird erfindungsgemäß dadurch gelöst, dass die Enden der Stahlseile im Endbereich jedes Gurt- bzw. Segmentendes von den Gummischichten freigelegt sind, dass die freigelegten Stahlseilenden in entsprechenden Längsbohrungen einer Scharnierplatte stecken und dort positionssicher durch Verpressen der Scharnierplatte fixiert sind,
dass jede der beiden Scharnierplatten an ihrem freien Ende jeweils ein Teilscharnier aus zinnenartigen Vorsprüngen aufweist, das mit dem jeweils anderen Teilscharnier zusammenlegbar ist.

Die Scharnierplatten werden vorzugsweise aus Metall gefertigt und wirken als Pressteil, durch das eine kraft- und formschlüssige Verbindung direkt zwischen Scharnierplatte und den Stahlseilen entsteht.

Die Scharnierplatten enthalten Längsbohrungen in Richtung der Stahlseile des Gurtes. Zur Herstellung der Verbindung zwischen einem Gurtende und einer Scharnierplatte werden die Stahlseile auf der Länge der vorgesehenen Verbindung freigelegt und in die Längsbohrungen der Scharnierplatte eingefügt. Mittels einer Presse wird der Bereich der Scharnierplatte, in dem die Stahlseile eingeführt sind, zusammengepresst. Es entsteht eine kraft- und teilweise formschlüssige Verbindung zwischen Scharnierplatte und den eingesteckten Stahlseilen.

Jedes der beiden Teilscharniere der Scharnierverbindung ist einteilig ausgeführt, was die Montage wesentlich erleichtert.

Durch die Erfindung kann die in Gurtlängsrichtung angeordnete Stahlseilkordlage ohne Auslenkung verlaufen. Eine aufwendige Vulkanisation der Gurtenden miteinander ist nicht mehr notwendig.

Durch die Erfindung wird eine Scharnierverbindung der Gurtenden eines Fördergurtes oder Fördergurtsegmente geschaffen, durch die eine Übertragung der für den jeweiligen Stahlseilgurt zulässigen Zugkräfte gewährleistet ist. Die Konstruktionsteile des jeweiligen Teilscharnieres liegen im Wesentlichen innerhalb des Gurtquerschnittes.

Anhand der Zeichnung wird nachstehend ein Ausführungsbeispiel der Erfindung näher erläutert. Es zeigt
- Fig. 1: eine geschlossene Scharnierverbindung zweier Enden eines Stahlseil-Fördergurtes;

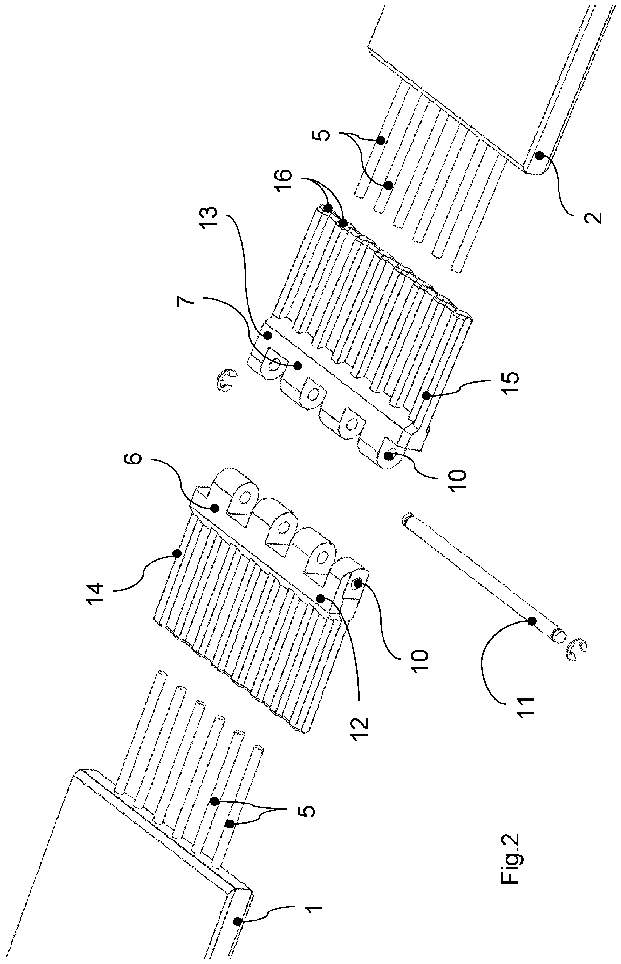

- Fig. 2: die in Fig. 1 dargestellte Scharnierverbindung im gelösten Zustand;
- Fig. 3: die Scharnierverbindung in einer gläsernen Darstellung zur Verdeutlichung der eingebetteten, parallelen Stahlseile.

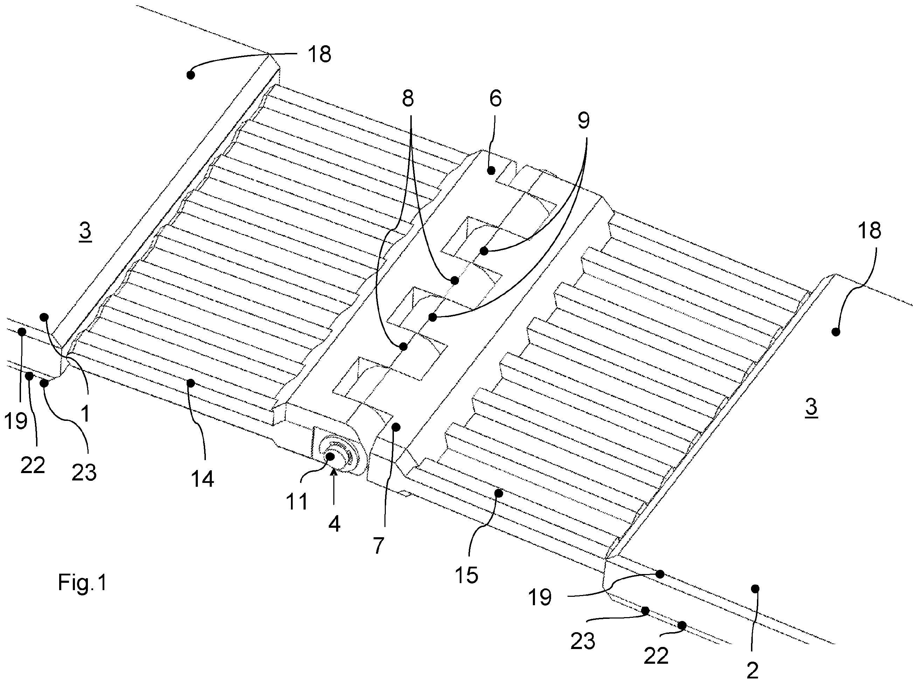

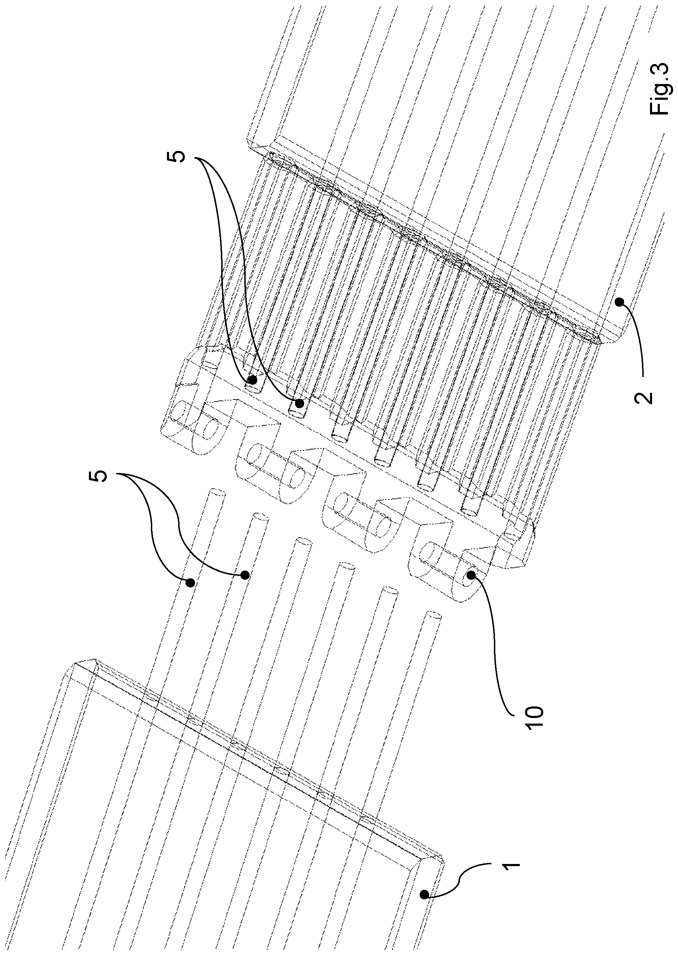

Zwei Enden 1 und 2 eines Stahlseilfördergurtes 3 sind über ein Scharnier 4 miteinander zugfest verbunden (Fig. 1). Der Stahlseilfördergurt 3 ist in an sich bekannter Weise aus elastomerem Werkstoff aufgebaut und weist eine eingebettete Festigkeitsträgerlage aus Stahlkorden bzw. parallel angeordneten Stahlseilen 5 auf. Zur Darstellung dieser Einbettung sind in Fig. 3 die Gurtenden 1, 2 in gläsernem Schnitt dargestellt.

Das Scharnier 4 besteht aus zwei Teilscharnieren 6 und 7, deren zinnenartige Vorsprünge 8 bzw. 9 derart ineinander greifen, dass die in den Vorsprüngen 8 bzw. 9 angeordneten Querbohrungen 10 miteinander fluchten, so dass ein Kupplungsstab 11 durch die Querbohrungen 10 zum Schließen des Scharniers 4 einführbar ist. Jedes Teilscharnier 6 bzw. 7 weist einen die zinnenartigen Vorsprünge 8, 9 tragenden Scharnierriegel 12 bzw. 13 auf, an dem scharnierabgewandt jeweils eine abgesetzte Scharnierplatte 14 bzw. 15 angeformt ist. Jedes Teilscharnier 6 bzw. 7 ist einteilig ausgeführt.

Im Nachfolgenden wird nur eine Scharnierseite beschrieben. Diese Ausführungen gelten sinngemäß auch für die andere Scharnierseite. Die Teilscharniere 6 und 7 sind baugleich ausgeführt.

In dem Endbereich des Gurtendes 2 sind die Gummideckschichten und die Kerngummischicht, in die die Stahlseile 5 eingebettet sind, entfernt. Die Enden der Stahlseile 5 sind somit im Endbereich ausgefingert, d.h. sie liegen frei.

Die ausgefingerten Enden der Stahlseile 5 sind in Längsbohrungen 16 der Scharnierplatte 15 eingesteckt, die in Richtung der Stahlseile des Gurtes 3 verlaufen. Zur Herstellung der Verbindung zwischen Gurtende 2 und Scharnierplatte 15 werden die Stahlseile 5 auf der Länge der vorgesehenen Verbindung freigelegt und in die Längsbohrungen 16 der Scharnierplatte 15 eingefügt. Mittels einer Presse wird der Bereich der Scharnierplatte 15, in den die Stahlseile 5 eingeführt wurden, zusammengepresst. Es entsteht eine kraft- und teilweise formschlüssige Verbindung zwischen Scharnierplatte 15 und den Stahlseilen 5.

Die beiden Teilscharniere 6 und 7 werden zu dem Scharnier 4 zusammengelegt. Die Zugkräfte der Fördergurtenden 1 und 2 werden von den Stahlseilen 5 über die Scharnierplatten 14 und 15 auf das Scharnier 4 übertragen.

### Bezugszeichenliste

### (Teil der Beschreibung)

- 1: Fördergurtende
- 2: Fördergurtende
- 3: Stahlseilfördergurt
- 4: Scharnier
- 5: Stahlkorde; Stahlseile
- 6: Teilscharnier
- 7: Teilscharnier
- 8: zinnenartige Vorsprünge
- 9: zinnenartige Vorsprünge
- 10: Querbohrungen
- 11: Kupplungsstab
- 12: Scharnierriegel
- 13: Scharnierriegel
- 14: abgesetzte Scharnierplatte
- 15: abgesetzte Scharnierplatte
- 16: Längsbohrungen

## Patentansprüche

1. Fördergurt oder Fördergurtsegment aus elastomerem Werkstoff mit einer Festigkeitsträgerlage aus in Längsrichtung des Fördergurtes verlaufenden, parallel zueinander angeordneten Stahlseilen, wobei jedes Gurt- bzw. Segmentende eine Ausbildung zum scharnierartigen Zusammenkoppeln mit einem anderen Gurt- bzw. Segmentende aufweist,
**dadurch gekennzeichnet,**
**dass** die Enden der Stahlseile (5) im Endbereich jedes Gurt- bzw. Segmentendes (1 bzw. 2) von den Gummischichten freigelegt sind,
**dass** die freigelegten Enden der Stahlseile (5) in entsprechenden Längsbohrungen (16) einer Scharnierplatte (14 bzw. 15) stecken und dort positionssicher durch Verpressen der Scharnierplatte (14 bzw. 15) fixiert sind,
**dass** jede der beiden Scharnierplatten (14 bzw. 15) an ihrem freien Ende jeweils ein Teilscharnier (6 bzw. 7) aus zinnenartigen Vorsprüngen (8 bzw. 9) aufweist, das mit dem jeweils anderen Teilscharnier (6 bzw. 7) zusammenlegbar ist.

## Claims

1. Conveyer belt or conveyer belt segment of elastomeric material with a reinforcing support layer of steel cords which run in the longitudinal direction of the conveyer belt and are arranged parallel to one another, wherein each belt or segment end has a formation for the hinge-like coupling together to another belt or segment end, **characterized**
**in that** the ends of the steel cords (5) in the end region of each belt or segment end (1 and 2) are exposed from the rubber layers,
**in that** the exposed ends of the steel cords (5) are inserted into corresponding longitudinal bores (16) in a hinge plate (14 or 15) and are fixed in a positionally secure manner there by pressing the hinge plates (14 and 15) together,
**in that** the free end of each of the two hinge plates (14 and 15) has a partial hinge (6 and 7, respectively) made of crenellation-type projections (8 and 9), which partial hinge can be combined with the other partial hinge (6 or 7) in each case.

## Revendications

1. Bande transporteuse ou segment de bande transporteuse en matériau élastomère comprenant une nappe de renforcement constituée de câbles d'acier s'étendant dans la direction longitudinale de la bande transporteuse, disposés parallèlement, chaque extrémité de bande ou de segment présentant une réalisation en vue de l'accouplement conjoint, à la manière d'une charnière, avec une autre extrémité de bande ou de segment,
**caractérisée en ce que**
les extrémités des câbles d'acier (5), dans la région d'extrémité de chaque extrémité de bande ou de segment (1, respectivement 2) sont exposées depuis les couches de caoutchouc,
**en ce que** les extrémités exposées des câbles d'acier (5) sont enfichées dans des alésages longitudinaux correspondants (16) d'une plaque de charnière (14, respectivement 15) et y sont fixées de manière sécurisée en position par pressage de la plaque de charnière (14, respectivement 15),
et **en ce que** chacune des deux plaques de charnière (14, respectivement 15) présente, à son extrémité libre, une charnière partielle respective (6, respectivement 7) constituée de saillies de type dents (8, respectivement 9), laquelle peut être assemblée à l'autre charnière partielle respective (6, respectivement 7).
